# EUROPEAN PATENT APPLICATION

(11) **EP 4 760 968 A1**
(43) Date of publication of application: **17.06.2026**
(21) Application number: 25808256.9
(22) Date of filing: 23.05.2025
(51) Int. Cl.: H01M 50/55, H01M 50/566, H01M 50/559, H01M 50/60, H01M 50/186, H01M 50/593, H01M 10/625, H01M 10/643, H01M 50/179

(54) **CYLINDRICAL BATTERY CELL CAPABLE OF BOTTOM COOLING**

(30) Priority: 24.05.2024 KR 20240068042
(71) Applicant: LG Energy Solution, Ltd., Seoul 07335 (KR)
(72) Inventor: JO, Min-Ki, Daejeon 34122 (KR); KO, Kwang-Hun, Daejeon 34122 (KR); KIM, Do-Gyun, Daejeon 34122 (KR); JUNG, Sang-Suk, Daejeon 34122 (KR)
(74) Representative: Goddar, Heinz J.
(86) International application number: PCT/KR2025/007031
(87) International publication number: WO 2025/244465

(57) **Abstract**

The present disclosure provides a cylindrical battery cell having a structure capable of rapid cooling through a bottom portion of a can, a battery pack including the battery cell and having a bottom cooling structure, and a vehicle including the battery pack as a power source. The battery cell includes a can having a sidewall portion extending in an axial direction, an opening present at a first end portion of the sidewall portion, and a bottom portion connected to a second end portion of the sidewall portion; an electrode assembly including a first electrode and a second electrode, the electrode assembly housed in the can; a cap covering the opening of the can and electrically connected to the first end portion of the sidewall portion; and a first electrode terminal installed at a central portion of the cap and electrically insulated from the cap, wherein the first electrode is electrically connected to the first electrode terminal, and the second electrode is electrically connected to the can and the cap.

## Description

### TECHNICAL FIELD

The present disclosure relates to a cylindrical battery cell, and more particularly, to a cylindrical battery cell having a structure capable of rapid cooling through a bottom portion of a can.

This application is based on and claims priority from Korean Patent Application No. 10-2024-0068042 filed on May 24, 2024 with the Korean Intellectual Property Office, the disclosure of which is incorporated herein in its entirety by reference.

### BACKGROUND

With the widespread use of electric vehicles, cylindrical battery cells having cylindrical battery cans as housings are increasing in capacity. In addition, as battery cell size increases, it is possible to place first and second electrode terminals on the upper surface of cylindrical battery cells. When the two electrode terminals are positioned at the upper end portion of the battery cells, the cylindrical battery cells may be arranged in upright position, and all busbars for the two electrode terminals may be positioned at the upper end portion of the battery cells, leading to a simpler structure of a vehicle battery pack.

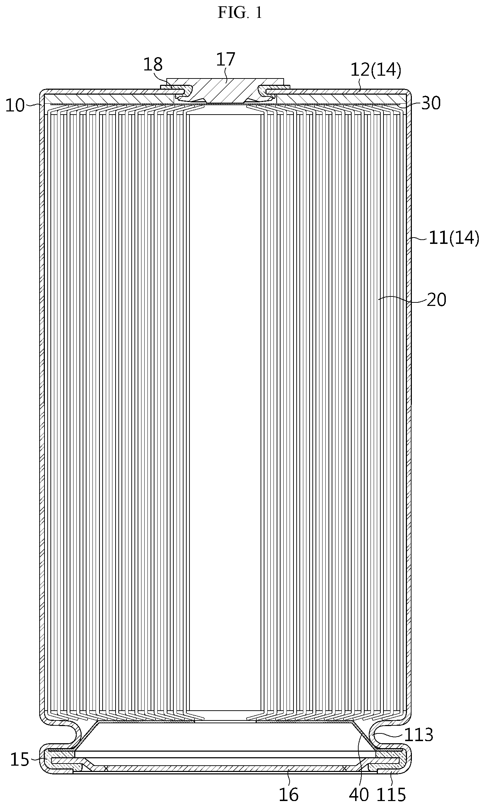

Referring to FIG. 1, the can 10 of the large-capacity cylindrical battery cell has a bottom portion 12 at the upper end portion and an opening at the lower end portion of a sidewall portion 11. A first electrode terminal 17 is installed at the central portion of the bottom portion 12 with a terminal gasket 170 interposed between them to create an airtight seal.

When an electrode assembly 20 is housed in the can 10, a first current collector plate 30 joined to a first electrode of the electrode assembly 20 is joined and electrically connected to the first electrode terminal 17, and a second current collector plate 40 joined to a second electrode of the electrode assembly 20 is joined and electrically connected to a beading portion 113 at the lower end portion of the sidewall portion 11 of the can 10. Accordingly, the bottom portion 12 and the sidewall portion 11 may form a second electrode terminal 14.

A cap 16 is secured to the lower end portion of the sidewall portion 11 to close the opening of the can 10. The edge of the cap 16 is installed and compressed between the beading portion 113 and a crimping portion 115 of the sidewall portion 11 with a cap gasket 15 interposed therebetween. The cap 16 may be non-polar because it is not charged by the cap gasket 15.

However, because the battery cell has the cap 16 at the lower end portion of the can 10 and an air gap between the cap 16 and the electrode assembly 20 acts as a thermal insulation layer, when the battery cells are placed in the battery pack in upright position, bottom cooling of the battery cells is impossible.

Accordingly, the above-described battery cell structure uses side cooling through the sidewall portion 11. This battery cell cooling method has the limited degree of freedom in design of the battery pack. For example, it is impossible to apply the battery pack structure capable of bottom cooling.

### DISCLOSURE

### Technical Problem

The present disclosure is designed to solve the above-described problems, and therefore the present disclosure is directed to providing a battery cell having a first electrode terminal and a second electrode terminal at the upper end portion and a structure capable of bottom cooling.

The present disclosure is further directed to providing a battery pack including battery cells having first electrode terminals and second electrode terminals at the upper end portion and allowing for bottom cooling, and a vehicle including the battery pack.

The technical problems of the present disclosure are not limited to the aforementioned problems, and these and other objectives and advantages of the present disclosure may be understood from the following description and will become apparent from the embodiments of the present disclosure. Also, it will be easily understood that the objectives and advantages of the present disclosure may be realized by the means set forth in the appended claims and a combination thereof.

### Technical Solution

To solve the above-described problems, the present disclosure may be applied to a cylindrical battery cell in which both a first electrode terminal and a second electrode terminal are provided at a first end portion in an axial direction.

The battery cell may include a can having a sidewall portion extending in the axial direction, an opening present at a first end portion of the sidewall portion, and a bottom portion connected to a second end portion of the sidewall portion.

The can may have a cylindrical shape.

The battery cell may include an electrode assembly including a first electrode and a second electrode, the electrode assembly housed in the can.

A side of the electrode assembly that faces the bottom portion may be supported in contact with the bottom portion.

The battery cell may include a cap covering the opening of the can.

The battery cell may include a first electrode terminal installed at the cap.

The first electrode terminal may be installed through a hole that will be present in the cap.

The first electrode terminal may be installed at a central portion of the cap.

The first electrode terminal may be electrically insulated from the cap.

An edge portion of the cap may be joined to the first end portion of the sidewall portion.

The edge portion of the cap may be welded to the first end portion of the sidewall portion in the axial direction to seal the can.

The edge portion of the cap may be welded and electrically connected to the sidewall portion.

The welding may include seam welding. The welding may be done by a laser.

The first electrode is electrically connected to the first electrode terminal, and the second electrode is electrically connected to the can and the cap.

Accordingly, the first electrode terminal may have a first polarity, and the can and the cap may have a second polarity.

The electrode assembly may have a structure in which the first electrode and the second electrode are wound around a winding core hollow portion with a separator interposed between the first electrode and the second electrode.

The winding core hollow portion may extend in the axial direction.

The electrode assembly may include a first electrode tab electrically connected to the first electrode.

The first electrode tab may be positioned at the first end portion of the electrode assembly in the axial direction.

The first electrode tab may be joined and electrically connected to the first electrode terminal.

The first electrode may protrude outward in the axial direction from the first end portion of the electrode assembly in the axial direction and bend in a radial direction to provide a first surface that faces outward in the axial direction.

The first electrode may be electrically connected to the first electrode terminal through a first current collector plate.

The first current collector plate may include a first electrode connection portion joined to the first electrode, and a first terminal connection portion joined to the first electrode terminal.

The first terminal connection portion may extend with a small thickness from the first electrode connection portion for the purpose of flexibility.

The first electrode connection portion of the first current collector plate may be joined to the first surface to electrically connect the first electrode to the first current collector plate.

An electrical insulator may be positioned between the cap and the electrode assembly in the axial direction.

The insulator may be positioned between the cap and the first electrode connection portion in the axial direction.

The electrode assembly may include a second electrode tab electrically connected to the second electrode.

The second electrode tab may be positioned at a second end portion of the electrode assembly in the axial direction.

The second electrode tab may be joined and electrically connected to the bottom portion.

The second electrode may protrude outward in the axial direction from the second end portion of the electrode assembly in the axial direction and bend in the radial direction to provide a second surface that faces outward in the axial direction.

The second electrode may be electrically connected to the can through a second current collector plate.

The second current collector plate may include a second electrode connection portion joined to the second electrode, and a second terminal connection portion joined to the bottom portion of the can.

The second electrode connection portion of the second current collector plate may be joined to the second surface to electrically connect the second electrode to the second current collector plate.

The second surface may contact the bottom portion with the second current collector plate interposed therebetween in the axial direction.

The second surface and the second current collector plate may face and contact each other in the axial direction, and the second current collector plate and the bottom portion may face and contact each other in the axial direction.

The cap may have a vent notch having a reduced thickness at an inner location in a radial direction than the edge portion. Accordingly, when the internal pressure of the battery cell increases, the vent notch may rupture to open the cap body portion, thereby preventing the battery cell from exploding.

The present disclosure provides a battery pack including a pack case accommodating the battery cell.

The battery cell may be placed in the pack case such that the bottom portion contacts a bottom of the pack case and the cap faces upward.

The bottom of the pack case may have a cooling structure for cooling the battery cell through the bottom portion of the battery cell.

The present disclosure provides a vehicle including the battery pack, wherein the vehicle is powered by a power source from the battery pack.

### Advantageous Effects

Because the first electrode terminal is installed at the cap to achieve insulation and create an airtight seal and the cap is hermetically secured and electrically connected to the can, the battery cell of the present disclosure has the first electrode terminal and the second electrode terminal positioned at the upper end portion and a structure capable of bottom cooling.

The present disclosure has a structure capable of bottom cooling of the electrode assembly because the surface of the electrode assembly facing the bottom portion of the can contacts the bottom portion of the can.

Because the second electrode is bent inward in the radial direction from the second end portion of the electrode assembly and comes into contact with the bottom portion of the can through the second current collector plate, the battery cell of the present disclosure may quickly dissipate heat generated from the electrode assembly through the bottom of the battery cell via the second electrode, the second current collector plate and the bottom portion in a sequential order.

The battery pack including the battery cell of the present disclosure may have a bottom cooling structure.

In addition to the above-described effects, specific effects of the present disclosure will be described below together with the detailed description of the embodiments.

### BRIEF DESCRIPTION OF THE DRAWINGS

The accompanying drawings illustrate the exemplary embodiments of the present disclosure and together with the aforementioned description, serve to provide a better understanding of the technical aspects of the present disclosure, and thus the present disclosure is not construed as being limited to the drawings. In the drawings, for clarity of description, the shape, size, scale or proportion of the elements may be exaggerated for emphasis.
FIG. 1 is a cross-sectional view showing a type of cylindrical battery cell for comparison.
FIG. 2 is an exploded perspective view of an electrode assembly before winding; the electrode assembly will be housed in a can of FIG. 1.
FIG. 3 is a perspective view of the electrode assembly of FIG. 2 in a laminated state before winding.
FIG. 4 is a perspective view of a cylindrical jelly-roll type electrode assembly in an assembled state by winding the laminate of FIG. 3.
FIG. 5 is a perspective view showing a first current collector plate joined to an electrode tab at a first end portion of an electrode assembly in an axial direction that will be faced with an opening of a can.
FIG. 6 is a perspective view showing a second current collector plate joined to an electrode tab at a second end portion of an electrode assembly in an axial direction that will be faced with a bottom portion of a can.
FIG. 7 is a perspective view showing a cap joined to the first current collector plate of the electrode assembly of FIG. 5.
FIG. 8a is a cross-sectional view showing that an electrode assembly is inserted into a can such that a second current collector plate contacts a bottom portion and a first current collector plate and a cap are positioned at an opening side, and the cap is joined to an inner surface of a sidewall portion.
FIG. 8b is a cross-sectional view showing that an electrode assembly is inserted into a can such that a second current collector plate contacts a bottom portion, and a first current collector plate and a cap are positioned at an opening side and the cap is joined to the top of a sidewall portion.
FIG. 9 is a diagram showing a battery pack including the battery cell of FIG. 8 within a pack housing.
FIG. 10 is a diagram showing a vehicle including the battery pack of FIG. 9.

### BEST MODE

Hereinafter, the present disclosure will be described in detail with reference to the accompanying drawings. It should be understood that the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspects of the present disclosure and are not intended to be limiting, so it should be understood that many other equivalents and modifications could be made thereto at the time the application was filed.

It should be understood that "including", "comprising" or "having" when used in this specification, specifies the presence of the stated elements, but does not preclude the presence or addition of one or more other elements unless otherwise expressly stated.

The terms 'about' and 'substantially' are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

In this specification, the terms related to positions or directions such as "upper", "lower", "left", "right", "inner" and "outer" may indicate directions in the drawings to which reference is made and should not be limiting. The terms "inner" and "outer" indicate directions toward or away from the geometric center of the designated device, system and their elements, respectively. These terms include the listed words, their derivatives, and words of similar meanings.

In this specification, when an element is referred to as being present "on" another element, it can be in contact with the other element and intervening elements may be present.

The above-described objectives, features and advantages will be described in detail below with reference to the accompanying drawings, and accordingly those skilled in the art will easily carry out the technical aspects of the present disclosure. In describing the present disclosure, when it is determined that a detailed description of related known technology may unnecessarily obscure the subject matter of the present disclosure, its detailed description is omitted. Hereinafter, an exemplary embodiment according to the present disclosure will be described in detail with reference to the accompanying drawings. In the drawings, the same reference numerals are used to indicate the same or similar elements.

Although the terms first, second, etc. are used to describe different elements, these elements are not limited by the terms. The terms are simply used to distinguish one element from another, and unless otherwise expressly stated, a first element may be a second element.

Throughout the specification, unless otherwise expressly stated, each element may be singular or plural.

Hereinafter, an element "on (or below)" another element may represent that it can be in contact with an upper surface (or a lower surface) of the other element, and intervening elements may be present.

Additionally, when an element is referred to as being "connected to", "coupled to" or "contact" another element, it should be understood that it can be directly connected to or contact the other element, and intervening elements may be present, or each element may be "connected to", "coupled to" or "contact" each other through another element.

The singular forms as used herein include the plural forms unless the context clearly indicates otherwise. The term "comprising" or "including" as used herein should not be construed as necessarily including all the elements or steps described in this specification, and should be construed as not including some of the elements or steps, or further including additional elements or steps.

Throughout the specification, "A and/or B" refers to either A or B, or both unless otherwise expressly stated, and "C to D" refers to C or more and D or less unless otherwise expressly stated.

In describing an embodiment, an axial direction refers to an extension direction of an axis that forms a winding center of a jelly-roll type electrode assembly, a radial direction refers to a direction toward or away from the axis, and a circumferential direction refers to a direction surrounding the axis.

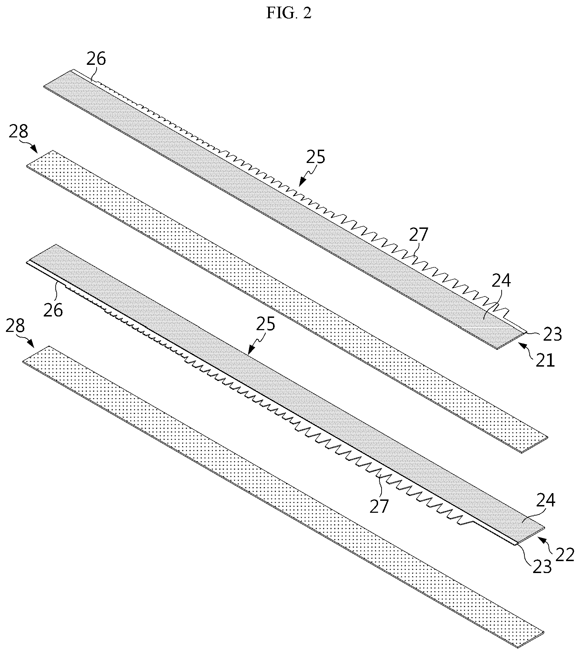

Referring to FIGS. 2 to 8b, the battery cell according to an embodiment of the present disclosure may include an electrode assembly 20, current collector plates 30, 40 electrically connected to the electrode assembly 20, and a can 10 accommodating the electrode assembly 20 and the current collector plates 30, 40. The battery cell may include a cylindrical battery cell.

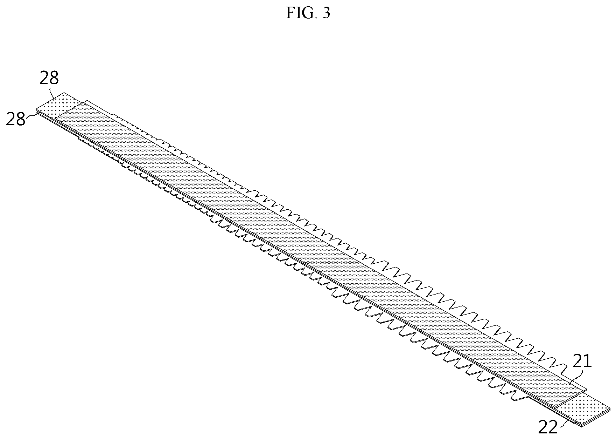

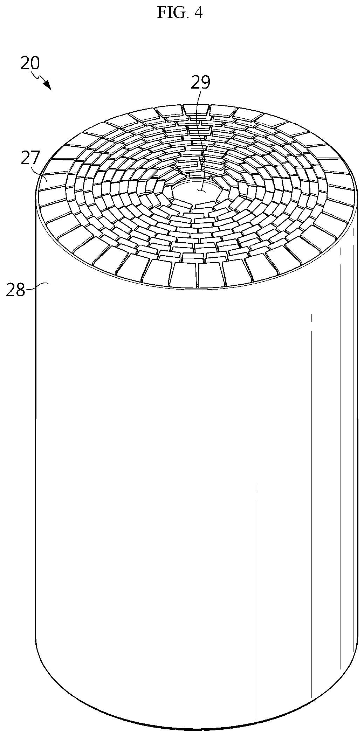

The electrode assembly 20 may be in a cylindrical shape, manufactured by preparing a first electrode 21, a second electrode 22 and a separator 28 extending in the length direction with a predetermined width as shown in FIG. 2, laminating the first electrode 21, the separator 28, the second electrode 22 and the separator 28 in that order to form a laminate as shown in FIG. 3, and winding the laminate around a winding axis into a jellyroll shape as shown in FIG. 4.

The first electrode 21 may be a positive electrode and the second electrode 22 may be a negative electrode, or vice versa.

The first electrode 21 and the second electrode 22 may be manufactured in a sheet form. The electrode sheet may be manufactured by applying an active material layer 24 to the surface of a metal foil 23. The electrode sheet may have a coated portion 25 where the active material layer 24 is present and an uncoated portion 26 where the active material layer 24 is absent. The positive electrode sheet may have the uncoated portion 26 at one side in the width direction, and the negative electrode sheet may have the uncoated portion 26 at the other side in the width direction.

The uncoated portion 26 may be an exposed or protruded portion of the laminate in the width direction. The uncoated portion 26 itself may act as an electrode tab 27. The electrode tab 27 may be connected to the uncoated portion 26.

The uncoated portion 26 is notched at a predetermined interval to form flag-shaped notching tabs 27.

FIGS. 2 and 3 show that the notching tabs 27 have an equilateral trapezoidal shape. However, the notching tabs 27 may come in many different shapes, for example, semicircular, semi-elliptical, triangular, rectangular or parallelogram shapes.

FIGS. 2 and 3 show that the notching tabs 27 arranged along the length direction have the same width. However, the width of the notching tabs may increase gradually or stepwise from the winding core to the outer circumference.

FIGS. 2 and 3 show that the height of the notching tabs 27 gradually increases from the winding core to the outer circumference. However, the height of the notching tabs may be constant or gradually decrease.

FIGS. 2 and 3 show that the notching tabs 27 are deleted from a predetermined part of the centripetal side end portion of the uncoated portion 26 and a predetermined part of the centrifugal side end portion of the uncoated portion 26. However, the notching tabs may not be deleted from the centripetal side end portion of the uncoated portion, or the notching tabs may not be deleted from the centrifugal side end portion of the uncoated portion.

Referring to FIG. 4, in the jelly-roll type electrode assembly 20, the notching tabs 27 may be bent in the radial direction and flattened. The notching tabs 27 may be bent inward or outward in the radial direction. FIG. 4 shows the notching tabs 27 bent inward in the radial direction.

The notching tabs 27 may be bent one by one in the process of winding the laminate to form the jelly-roll type electrode assembly 20. In contrast, the notching tabs 27 may be bent all at once after winding the laminate to form the jelly-roll type electrode assembly 20.

The notching tabs 27 of the first electrode 21 and the notching tabs 27 of the second electrode 22 bent in the radial direction and positioned one over another may provide a first plane and a second plane substantially perpendicular to the axial direction at two end portion of the electrode assembly 20 in the axial direction, respectively.

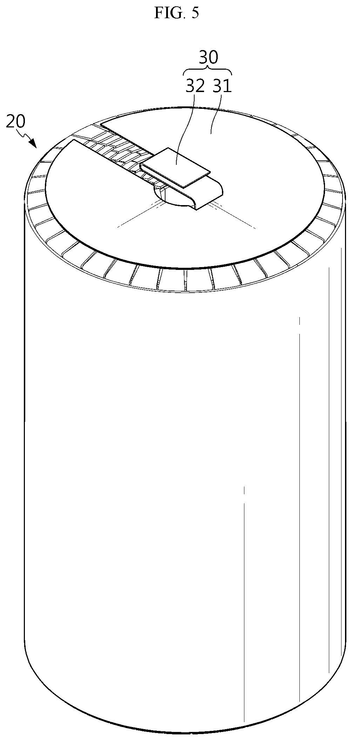

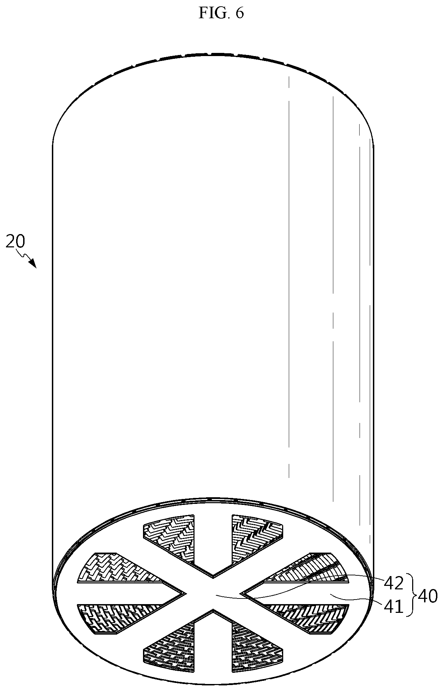

The first current collector plate 30 and the second current collector plate 40 may be joined to the first surface and the second surface which are substantially flat, provided by bending the exposed notching tabs 27 through the two end portions of the electrode assembly 20 in the axial direction, respectively, as shown in FIGS. 5 and 6.

FIGS. 5 and 6 show that the first current collector plate 30 is a positive current collector plate, and the second current collector plate 40 is a negative current collector plate. However, the first current collector plate 30 may be a negative current collector plate, and the second current collector plate 40 may be a positive current collector plate.

The second current collector plate 40 may include copper, and the first current collector plate 30 may include aluminum. However, the materials are not limited thereto and may include any material commonly used in the art.

The current collector plates 30, 40 may be manufactured by punching, trimming, piercing and bending of a metal sheet.

Referring to FIG. 5, the first current collector plate 30 may include a first electrode connection portion 31 and a first terminal connection portion 32. The first electrode connection portion 31 may define a hole corresponding to a winding core hollow portion 29 of the electrode assembly 20 and surround the hole. The first electrode connection portion 31 does not need to be in a closed loop form and may be in a C shape as shown. That is, the first electrode connection portion 31 may extend in the circumferential direction. The first electrode connection portion 31 may be connected to the electrode tab. The first terminal connection portion 32 may be connected to the first electrode connection portion 31 and extend with a predetermined width to allow it to flexibly deform in the axial direction from the first electrode connection portion 31. A first electrode terminal 17 as described below may be joined to the tip of the first terminal connection portion 32.

Referring to FIG. 6, the second current collector plate 40 may have a second terminal connection portion 42 extending radially from the central portion, and a second electrode connection portion 41 connected to the second terminal connection portion 42 through a ring portion connecting the centrifugal edges of the second terminal connection portion 42 in the circumferential direction. The second electrode connection portion 41 and the second terminal connection portion 42 may be arranged in an alternating manner along the circumferential direction, and the second electrode connection portion 41 may extend inward in the radial direction from the ring portion. The inner end of the second electrode connection portion 41 in the radial direction may not be connected to the second terminal connection portion 42. The central portion of the second terminal connection portion 42 may cover at least a part of the winding core hollow portion 29 of the electrode assembly 20. The second electrode connection portion 41 may be connected to the electrode tab.

The first electrode connection portion 31 may be joined to the notching tabs 27 of the first electrode 21 of the electrode assembly 20 by laser welding before placing the electrode assembly 20 in the can. The laser welding line may extend radially.

The second electrode connection portion 41 may be joined to the notching tabs 27 of the second electrode 22 of the electrode assembly 20 by laser welding before placing the electrode assembly 20 in the can. The laser welding line may extend radially.

In contrast, the first electrode connection portion 31 may be joined to the notching tabs 27 of the first electrode 21 of the electrode assembly 20 by laser welding after placing the electrode assembly 20 in the can 10. Accordingly, the second current collector plate 40 and the bottom portion 12 may be welded more effectively.

Additionally, the first electrode connection portion 31 may be joined to the notching tabs 27 of the first electrode 21 of the electrode assembly 20 by laser welding after welding the second current collector plate 40 to the bottom portion 12 before injecting an electrolyte solution into the can 10.

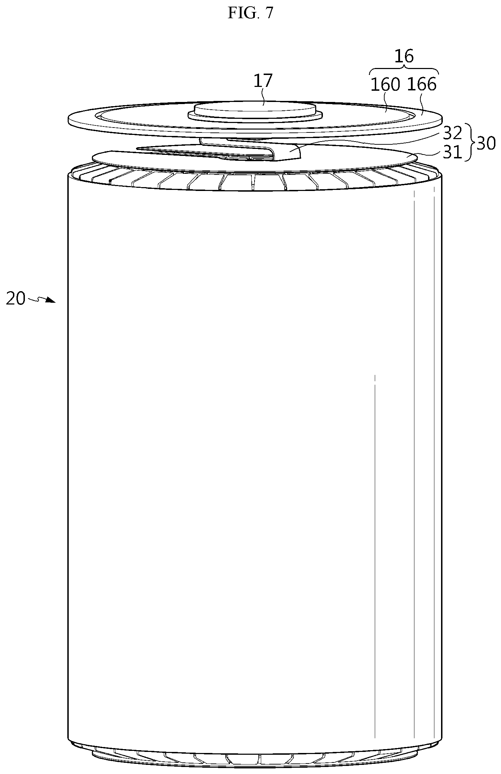

Referring to FIG. 7, the electrode assembly 20 may be electrically connected to a cap 16.

The cap 16 may include a cap body 160 having a hole at the central portion and an edge portion 166 connected to the outer side of the cap body in the radial direction. A rivet terminal 17 may be riveted to the cap body 160. In addition, the rivet terminal 17 and the cap body 160 disposed around the rivet terminal 17 may act as the first electrode terminal 17 and a second electrode terminal, respectively.

For example, the first electrode terminal 17 of the cap 16 may be joined, secured and electrically connected to the end of the first terminal connection portion 32 of the first current collector plate 30 by a thermal bonding method, for example, welding.

The electrode assembly 20 may be connected to the cap 16 before it is placed in the can. The electrode assembly 20 may be connected to the cap 16 after it is placed in the can.

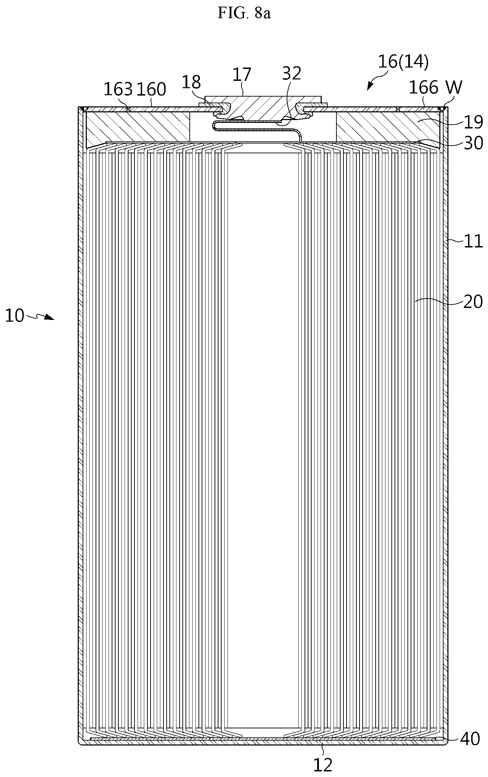

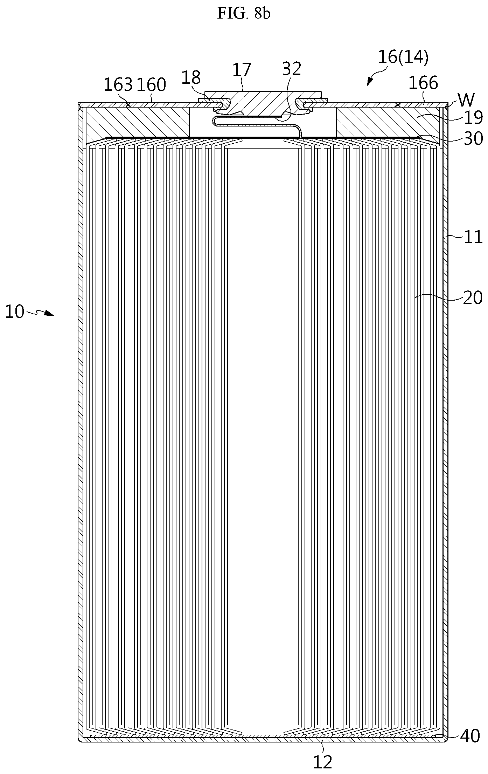

It will be described in further detail with reference to FIGS. 8a and 8b.

The can 10 may include a sidewall portion 11 extending in the axial direction between a first end portion and a second end portion, and the bottom portion 12 connected to the second end portion of the sidewall portion 11 and extending in the radial direction. The first end portion of the sidewall portion 11 may be open and define the opening of the can 10.

The bottom portion 12 may have a disc shape, and the sidewall portion 11 may have a circular tubular shape. The sidewall portion 11 may not have a beading portion. That is, the sidewall portion 11 may have a pillar shape with a circular or oval cross section. When the sidewall portion 11 does not have the beading portion, the distance between the cap 16 and the electrode assembly 20 may be reduced, thereby further improving energy density of the battery cell.

The bottom portion 12 and the sidewall portion 11 may be manufactured by forming a metal sheet of steel plated with nickel on the surface by deep drawing, and trimming with a punch while a blank holder is holding the edges of the sidewall portion 11. The material of the can 10 is not limited thereto. The bottom portion 12 may have an even thickness. Accordingly, heat may be uniformly released through the bottom portion 12. The bottom portion 12 does not include a vent notch and may have an even thickness, to form cooling structure below the bottom portion 12.

The electrode assembly 20 may be housed in the can 10, and the opening may be covered with the cap 16 to form a seal.

The cap 16 may include the cap body 160 having the hole at the central portion and the edge portion 166 connected to the outer side of the cap body 160 in the radial direction. The cap 16 may include at least one vent notch 163. The cap body 160 and/or the edge portion 166 may include the vent notch 163 having lower strength by reducing the thickness of the cap. Accordingly, when the internal pressure of the battery cell increases, the vent notch 163 may rupture to open the cap body 160 and/or the edge portion 166, thereby preventing the battery cell from exploding. The vent notch 163 may include at least one vent notch. The cap body 160 and the edge portion 166 may be connected to each other through the vent notch 163 interposed therebetween in the radial direction. The cap 16 may have a shape of a plate including the cap body 160 and the edge portion 166.

The cap generally has a sloped portion between the cap body portion and the edge portion, so the cap body portion protrudes outward compared to the edge portion. However, because the cap of the present disclosure does not have a sloped portion between the cap body and the edge portion, the cap body does not protrude outward. Accordingly, an unnecessary empty space is not formed between the cap and the electrode assembly, so the energy density of the battery cell may be improved.

The first electrode terminal 17 may fit into the hole at the central portion of the cap 16. The first electrode terminal 17 may be secured to the cap body 160 by riveting with a terminal gasket 18 is interposed therebetween. The terminal gasket 18 may be positioned between the first electrode terminal 17 and the cap body 160 to form a seal between the inside and the outside of the cap 16, thereby preventing electrolyte leaks and electrically insulating the first electrode terminal 17 from the cap 16.

However, the method of connecting the first electrode terminal 17 to the cap 16 is not limited thereto, and may include any method for forming a seal between the first electrode terminal 17 and the cap 16 and electrically insulating the first electrode terminal 17 from the cap 16, and for example, bolt-nut fastening, glass sealing or chrome coating & PP-MAH thermal bonding.

The first electrode terminal 17 may have a first polarity, and the cap 16 may have a second polarity. The edge portion 166 of the cap 16 may be secured and electrically connected to the first end portion of the sidewall portion 11 of the can 10. Accordingly, the cap 16, the sidewall portion 11 of the can 10 and the bottom portion 12 connected thereto may all have a second polarity.

Accordingly, the battery cell including the cap 16 may have the first electrode terminal 17 and the second electrode terminal 14 positioned at the opening side of the can 10. Additionally, a busbar connected to the first electrode terminal 17 of the battery cell and a busbar connected to the second electrode terminal 14 may be located at the top of the battery cell. Accordingly, the battery cell may have a cooling structure for cooling the battery cell on the bottom portion 12 side of the can 10.

In an example, the first electrode terminal 17 may be a positive electrode terminal and the second electrode terminal 14 may be a negative electrode terminal, or vice versa.

As shown in FIG. 8a, the electrode assembly 20 may be housed in the can 10 in an aligned state such that the second current collector plate 40 faces the bottom portion 12 of the can 10. Additionally, two surfaces of the flat second current collector plate 40 may be positioned between the bottom portion 12 and the second surface of the second electrode 22, respectively. The second current collector plate 40 may be in surface contact with the second surface of the second electrode 22 and also in surface contact with the bottom portion 12. That is, one surface of the second current collector plate 40 may be in surface contact with the electrode assembly 20, and the other surface of the second current collector plate 40 may be in surface contact with the bottom portion 12. More specifically, the second electrode connection portion 41 on one surface of the second current collector plate 40 may contact the electrode tab of the electrode assembly 20, and the second terminal connection portion 42 on the other surface of the second current collector plate 40 may contact the bottom portion 12. Accordingly, the first electrode of the electrode assembly 20 may be positioned at the opening side, and the second electrode may be positioned at the bottom portion side. In addition, the surface of the electrode assembly 20 facing the bottom portion 12 may be supported by the bottom portion 12. Because the electrode assembly 20 is supported by the bottom portion 12 through the second current collector plate 40, due to the absence of an insulation layer, specifically an air insulation layer between the electrode assembly 20 and the bottom portion 12, heat within the battery cell may be quickly released to the atmosphere through the bottom portion 12.

The second terminal connection part 42 of the second current collector plate 40 may be joined to the bottom portion of the can 10. The joining may include thermal bonding. The thermal bonding may include, for example, welding.

The electrode assembly 20 housed in the can 10 may include the electrode tab electrically connected to the first electrode, and the electrode tab may be connected to the first electrode terminal 17. The electrode tab of the first electrode and the first current collector plate 30 may face the opening of the can 10. The electrode tab may be directly connected to the first electrode terminal 17, but may be connected through the first current collector plate 30. The first terminal connection portion 32 of the first current collector plate 30 may extend with a small thickness to provide flexibility during the assembly process of the cap 16.

Before covering the opening with the cap 16, the electrolyte solution may be injected into the can 10. After the electrolyte solution is fed, the opening may be covered with the cap 16.

The edge portion 166 of the cap 16 may be welded and electrically connected to the first end portion of the sidewall portion 11 in the axial direction. For example, as shown in FIG. 8a, the end portion of the edge portion 166 of the cap 16 may be connected to the inner surface of the first end portion of the sidewall portion 11. Alternatively, as shown in FIG. 8b, the first end portion of the sidewall portion 11 may be connected to the lower surface of the edge portion 166 of the cap 16.

The edge portion 166 and the sidewall portion 11 may be connected through welding. For example, a weld portion W may be formed at the contact area of the sidewall portion 11 and the cap 16 through laser seam welding to the contact area of the sidewall portion 11 and the cap 16 along the circumferential direction. By the weld portion W, the cap 16 and the sidewall portion 11 may be sealed and electrically connected together.

An insulator 19 made of an electrically insulating material may be positioned between the cap 16 and the electrode assembly 20. When the cap 16 is secured to the sidewall portion 11, the cap 16 may support the insulator 19 in the axial direction. Accordingly, the elasticity of the insulator 19 may elastically bring the second current collector plate 40 into close contact between the electrode assembly 20 and the bottom portion 12 in the axial direction.

For example, the upper surface of the insulator 19 may support the cap 16, and the lower surface of the insulator 19 may support the electrode assembly 20. That is, as the insulator 19 is located between the cap 16 and the electrode assembly 20, the can 10 and the electrode assembly 20 may be brought into close contact with each other. The insulator 19 may be located on the electrode assembly 20, and may contact the electrode assembly 20 and contact the first current collector plate 30. The insulator 19 may contact the electrode assembly 20 and the first collector plate 30 at the same time.

The can generally has the beading portion at the sidewall portion, so the beading portion is a consideration when placing the insulator. For example, it is necessary to consider the extent to which the beading portion is inserted into the can. However, because the can of the present disclosure does not have the beading portion at the sidewall portion, it is easy to design the insulator, and the insulator may be in close contact with the electrode assembly and the cap more firmly.

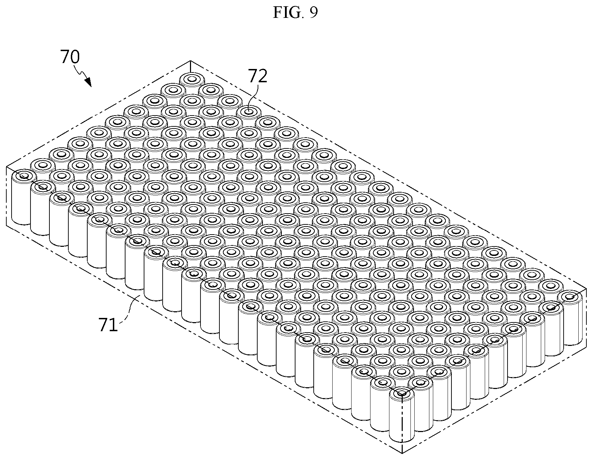

Referring to FIG. 9, the battery cell 72 may be housed in a pack housing 71 of a battery pack 70. The battery pack 70 may be formed using a battery module which is an intermediate form of assembly, or the battery pack 70 may be directly formed without a battery module as shown.

Because the battery cell 72 has a large volume, the battery cell 72 may easily form the battery pack 70 without a battery module or an intermediate structure. In addition, the battery cell 72 has lower internal resistance and higher energy density. Accordingly, the energy density of the battery pack 70 including the battery cell 72 may be improved.

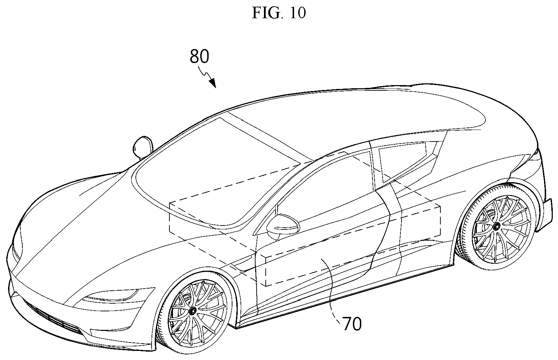

The battery pack 70 with increased energy density may reduce the volume and load while storing the same amount of energy. Accordingly, when the battery pack 70 including the battery cell 72 is mounted on a vehicle 80 using electricity as an energy source as shown in FIG. 10, mileage of the vehicle relative to energy may be increased.

The battery cell 72 may dissipate heat generated from the electrode assembly downwards through the second electrode, the second current collector plate and the bottom portion of the can quickly. Accordingly, the cooling structure at the bottom of the battery pack 70 may achieve rapid cooling of the battery cell 72.

It should be understood that the above-described embodiments are provided to describe the present disclosure by way of illustration all over the aspects, but not intended to be limiting, and the scope of the present disclosure will be defined by the appended claims rather than the above detailed description. Additionally, it should be interpreted that the meaning and scope of the appended claims and all changes and modifications that can be derived from the equivalent concept are included in the scope of the present disclosure.

Although the present disclosure has been hereinabove described with reference to the accompanying drawings, the present disclosure is not limited to the disclosed embodiments and the accompanying drawings, and it is obvious that various modifications and changes may be made thereto by those skilled in the art within the scope of the present disclosure. In addition, even though the effects of configuration of the present disclosure are not explicitly described in the description of the embodiments of the present disclosure, the effects of the present disclosure may include predictable effects of the corresponding configuration.

### [List of Reference Numerals]

10: Can
11: Sidewall portion
12: Bottom portion
14: Second electrode terminal
15: Cap gasket
16: Cap
160: Cap body
161: Hole
163: Vent notch
166: Edge portion
17: First electrode terminal
18: Terminal gasket
W: Weld portion
19: Insulator
20: Electrode assembly
21: First electrode
22: Second electrode
23: Metal foil
24: Active material layer
25: Coated portion
26: Uncoated portion
27: Electrode tab (Notching tab)
28: Separator
29: Winding core hollow portion
30: First current collector plate
31: First electrode connection portion
32: First terminal connection portion
40: Second current collector plate
41: Second electrode connection portion
42: Second terminal connection portion
70: Battery pack
71: Pack case
72: Battery cell
80: Vehicle

## Claims

1. A battery cell comprising:
a can having a sidewall portion extending in an axial direction, an opening present at a first end portion of the sidewall portion, and a bottom portion connected to a second end portion of the sidewall portion;
an electrode assembly including a first electrode and a second electrode, the electrode assembly housed in the can;
a cap covering the opening of the can and electrically connected to the first end portion of the sidewall portion; and
a first electrode terminal installed at a central portion of the cap and electrically insulated from the cap,
wherein the first electrode is electrically connected to the first electrode terminal, and the second electrode is electrically connected to the can and the cap.

2. The battery cell according to claim 1,
wherein a side of the electrode assembly that faces the bottom portion is supported by the bottom portion.

3. The battery cell according to claim 1,
wherein the first electrode is positioned at an opening side, and the second electrode is positioned at a bottom portion side.

4. The battery cell according to claim 1,
wherein an insulation layer is absent between the electrode assembly and the bottom portion.

5. The battery cell according to claim 1,
wherein an electrode tab is electrically connected to the first electrode, and
wherein the electrode tab electrically connected to the first electrode is connected to the first electrode terminal.

6. The battery cell according to claim 1,
wherein an electrode tab is electrically connected to the second electrode, and
wherein the electrode tab electrically connected to the second electrode is positioned at a bottom of the electrode assembly and joined to the bottom portion.

7. The battery cell according to claim 1,
wherein the first electrode is electrically connected to the first electrode terminal through a first current collector plate,
wherein the first current collector plate includes a first electrode connection portion joined to the first electrode, and a first terminal connection portion joined to the first electrode terminal,
wherein the first electrode protrudes outward in the axial direction from a first end portion of the electrode assembly in the axial direction and bends in a radial direction to provide a first surface that faces outward in the axial direction, and
wherein the first electrode connection portion of the first current collector plate is joined and electrically connected to the first surface.

8. The battery cell according to claim 1,
wherein the second electrode is electrically connected to the bottom portion through a second current collector plate,
wherein the second current collector plate has a second electrode connection portion joined to the second electrode, and a second terminal connection portion joined to the bottom portion of the can,
wherein the second electrode protrudes outward in the axial direction from the second end portion of the electrode assembly in the axial direction and bends in a radial direction to provide a second surface that faces outward in the axial direction, and
wherein the second electrode connection portion of the second current collector plate is joined and electrically connected to the second surface.

9. The battery cell according to claim 1,
wherein the cap includes a central portion and an edge portion, and
wherein the edge portion is electrically connected to the first end portion of the sidewall portion.

10. The battery cell according to claim 9,
wherein an end portion of the edge portion is joined to an inner surface of the first end portion of the sidewall portion.

11. The battery cell according to claim 9,
wherein the first end portion of the sidewall portion is joined to a lower surface of the edge portion.

12. The battery cell according to claim 1,
wherein the cap includes at least one vent notch.

13. The battery cell according to claim 1,
wherein an electrical insulator is located between the cap and the electrode assembly,
wherein an upper surface of the insulator supports the cap, and
wherein a lower surface of the insulator supports the electrode assembly.

14. A battery pack comprising:
the battery cell according to any one of claims 1 to 13; and
a pack case accommodating the battery cell.

15. The battery pack according to claim 14,
wherein the battery cell is placed in the pack case such that the bottom portion contacts a bottom of the pack case and the cap faces upward.

16. The battery pack according to claim 14
wherein a cooling structure for cooling the battery cell through the bottom portion of the battery cell is present at the bottom of the pack case.

17. A vehicle comprising the battery pack according to any one of claims 14 to 16,
wherein the vehicle is powered by a power source from the battery pack.
